# EUROPEAN PATENT APPLICATION

(11) **EP 1 892 527 A1**
(43) Date of publication of application: **27.02.2008**
(21) Application number: 06731244.7
(22) Date of filing: 30.03.2006
(51) Int. Cl.: G01N 30/88, B01D 11/02, B01D 15/00, G01N 1/10

(54) **METHOD OF PREPARING DIOXINS ANALYTICAL SAMPLE**

(30) Priority: 07.06.2005 JP 2005166473
(71) Applicant: MIURA CO., LTD., Matsuyama-shi Ehime 799-2696 (JP)
(72) Inventor: HONDA, Katsuhisa c/o Miura Co., Ltd., Ehime 7992696 (JP); HAMADA, Noriaki c/o Miura Co., Ltd., Ehime 7992696 (JP); MIYAWAKI, Takashi c/o Miura Co., Ltd., Ehime 7992696 (JP)
(74) Representative: Marchant, James Ian
(86) International application number: PCT/JP2006/307296
(87) International publication number: WO 2006/132027

(57) **Abstract**

An aliphatic hydrocarbon solvent solution obtained by extracting dioxins contained in a specimen such as soil with an aliphatic hydrocarbon solvent is supplied to an alumina layer 33 side of a sample-preparation column 30 in which the alumina layer 33 is placed on a carbon material layer 32. Upon flowing and passing of an aliphatic hydrocarbon solvent through the alumina layer 33 and the carbon material layer 32 in this order, the dioxins contained in the aliphatic hydrocarbon solvent solution are trapped in these layers. Then, one extracting solvent among toluene, a mixed solvent of toluene and an aliphatic hydrocarbon solvent, and a hydrophilic solvent capable of dissolving dioxins is supplied to the sample-preparation column 30 in the direction opposed to the passing direction of the aliphatic hydrocarbon solvent, the dioxins trapped in the carbon material layer 32 and the alumina layer 33 are extracted to obtain a sample for analysis of dioxins.

## Description

### Technical Field

The present invention relates to a method for preparing a sample for analysis of dioxins, and particularly to a method for preparing a sample for analysis of dioxins from an aliphatic hydrocarbon solvent solution of dioxins.

### Background Art

Since dioxins are environmental pollutants having strong toxicity, the Law Concerning Special Measures against Dioxins of Japan (Law No. 105/1999) obligates to periodically analyzing dioxins contained in an exhaust gas emitted from waste incineration facilities, air, water such as a factory effluent or river water, fly ash generated in waste incineration facilities, soil and the like. As used herein, the term "dioxins" means to include, in addition to polychlorodibenzo-para-dioxins (PCDDs) and polychlorodibenzofurans (PCDFs), coplanar polychlorobiphenyls (Co-PCBs) under the provision of the Law Concerning Special Measures against Dioxins of Japan, Article 2.

As the method for analysis of dioxins contained in a fluid such as an exhaust gas or an effluent water, and soil, a method using a gas chromatograph-mass spectrometer (GC/MS) (see Documents 1 to 4 described below) and a method using a bioassay method (see Document 5 described below) are known.

The method for analysis using a GC/MS is a method in which a sample for analysis of dioxins extracted from a fluid or soil is analyzed by a GC/MS and each of dioxins is qualitatively or quantitatively analyzed. In contrast, the bioassay method is a method for measurement of the toxicity equivalency (TEQ value) of dioxins in a sample for analysis using biological methods such as an immunoassay method (for example, an ELISA method), an EROD method and a DR-CALUX method because dioxins mean a generic name of various compounds and include compounds having strong toxicity and compounds having weak toxicity.

In an analysis method using a GC/MS (hereinafter referred to as a "GC/MS method") and a bioassay method, it is necessary that, first, dioxins are extracted from a specimen such as an exhaust gas or soil and a sample for analysis suited to each analysis method is prepared. When the specimen is a solid such as soil or incinerated ash, dioxins are extracted by an extraction method (for example, a Soxhlet extraction method) using an aliphatic hydrocarbon solvent such as hexane from the solid (see, for example, Documents 1, 2 and 3). In contrast, when the specimen is a fluid such as an exhaust gas or an effluent water, first, dioxins in the fluid are trapped and collected using an impinger made of glass described in Document 4 or filters described in Documents 6, 7, 8 and the like. Then, dioxins collected by the impinger made of glass or filters are extracted by an extraction method (for example, a Soxhlet extraction method, a washing method of an impinger made of glass, or the like) using the same aliphatic hydrocarbon solvent as that described above (see Documents 4, 6, 7 and 8).

To prepare a sample for analysis suited to the GC/MS method from the extract solution obtained through the step described above, namely, the aliphatic hydrocarbon solvent solution of dioxins, usually, the extract solution must be concentrated after being subjected to a purification treatment using a multilayer silica gel column. It is required to concentrate the extract solution by the following reason. A large amount of the aliphatic hydrocarbon solvent must be used in the above extraction operation. As a result, the amount of the extract solution increases and thus it is difficult to analyze the extract solution as it is at a time using the GC/MS method.

In contrast, in order to prepare a sample for analysis suited to the bioassay method from the above extract solution, usually, it is necessary to replace the solvent of a concentrated extract solution prepared for the GC/MS method by a small amount of a hydrophilic solvent capable of dissolving dioxins, for example, dimethyl sulfoxide.

Therefore, in order to prepare the sample for analysis suited to the GC/MS method or the bioassay method from the above extract solution, a complicated and cumbersome operation by an experienced operator is required.

Thus, the applicant of the present application has already proposed an apparatus capable of easily preparing a sample for analysis suited to the GC/MS method or the bioassay method from the above extract solution (see Document 9 described below). This apparatus has achieved purification and concentration of the extract solution by using a silica gel column in combination with a carbon material column. However, since there is a limitation on the degree of concentration, the sample for analysis thus obtained must be further subjected to a concentration operation in some cases. Also, this apparatus makes it hard to obtain a sample for analysis with high reliability because Co-PCBs contained in the extract solution may be discarded together with the solvent in the process for preparation of the sample for analysis.

### Document 1:

"Manual on Soil Investigation and Measurement Concerning Dioxins (2000)" edited by Soil and Agricultural Chemical Division, Water Quality Bureau, the Environment Agency of Japan

### Document 2:

"Manual on Sediment Investigation and Measurement Concerning Dioxins (2000)" edited by Water Quality Management Division, Water Quality Bureau, the Environment Agency of Japan

### Document 3:

"Provisional Manual on Endocrine Disruptors Investigation (1998)" edited by Water Quality Management Division, Water Quality Bureau, the Environment Agency of Japan

### Document 4:

Japan Industrial Standards JIS K 0311: 2005 revised on June 20, 2005 "Method for Measurement of Dioxins in Exhaust Gas"

### Document 5:

Japanese Unexamined Patent Publication (Kokai) No. 2001-226371

### Document 6:

Japanese Patent No. 3,273,796

### Document 7:

International Publication WO01/91883

### Document 8:

Japanese Unexamined Patent Publication (Kokai) No. 2004-53388

### Document 9:

Japanese Unexamined Patent Publication (Kokai) No. 2003-307474

An object of the present invention is to simply prepare a sample of dioxins for analysis with high reliability, which is suited for a GC/MS method or a bioassay method, from an aliphatic hydrocarbon solvent solution of dioxins.

### Disclosure of the Invention

A method for preparing a sample for analysis of dioxins from an aliphatic hydrocarbon solvent solution of dioxins of the present invention includes the steps of: supplying the aliphatic hydrocarbon solvent solution of dioxins to an alumina layer; supplying an aliphatic hydrocarbon solvent to the alumina layer, to which the aliphatic hydrocarbon solvent solution has been supplied, thereby passing the aliphatic hydrocarbon solvent through the alumina layer; supplying the aliphatic hydrocarbon solvent passed through the alumina layer to a carbon material layer, thereby passing the aliphatic hydrocarbon solvent through the carbon material layer; and supplying one extracting solvent selected from the group consisting of toluene, a mixed solvent of toluene and an aliphatic hydrocarbon solvent, and a hydrophilic solvent capable of dissolving the dioxins to the carbon material layer and the alumina layer after passing the aliphatic hydrocarbon solvent through the carbon material layer, in the direction opposed to the passing direction of the aliphatic hydrocarbon solvent, thereby securing a solution of the extracting solvent passed through the carbon material layer and the alumina layer in this order.

In this preparation method, most of dioxins in the aliphatic hydrocarbon solvent solution supplied to the alumina layer are trapped in the alumina layer when the aliphatic hydrocarbon solvent is supplied to the alumina layer, thereby passing the aliphatic hydrocarbon solvent through the alumina layer. Also, when the aliphatic hydrocarbon solvent passed through the alumina layer is supplied to the carbon material layer, thereby passing the aliphatic hydrocarbon solvent through the carbon material layer, a portion of the dioxins, which were not trapped in the alumina layer, are trapped in the carbon material layer. Therefore, the dioxins contained in the aliphatic hydrocarbon solvent solution are trapped by either the alumina layer or the carbon material layer, resulting in the state where the dioxins are not substantially contained in the aliphatic hydrocarbon solvent passed through the carbon material layer.

After passing the aliphatic hydrocarbon solvent through the carbon material layer, when an extracting solvent is supplied to the carbon material layer and the alumina layer, dioxins retained in the carbon material layer and the alumina layer are extracted with the extracting solvent. Herein, since most of dioxins are retained in the alumina layer, when the extracting solvent is supplied in the direction opposed to the passing direction of the aliphatic hydrocarbon solvent, thereby passing the extracting solvent through the carbon material layer and the alumina layer in this order, dioxins retained respectively in the carbon material layer and the alumina layer are extracted quickly with a small amount of the extracting solvent.

Herein, when toluene, or a mixed solvent of toluene and the aliphatic hydrocarbon solvent is used as the extracting solvent, a sample for analysis of dioxins suited to analysis by the GC/MS method can be obtained. In contrast, when a hydrophilic solvent is used as the extracting solvent, a sample for analysis of dioxins suited to analysis by the bioassay method can be obtained.

The aliphatic hydrocarbon solvent used in this preparation method is usually a nonpolar solvent having 5 to 10 carbon atoms.

The mixed solvent to be used as the extracting solvent is preferably a nonpolar aliphatic hydrocarbon solvent having 5 to 10 carbon atoms, which contains 1 to 10% by volume of toluene. Such a mixed solvent does not extract polychlorinated naphthalene, which may be trapped together with dioxins in the alumina layer and the carbon material layer, and may interfere analysis of dioxins by the GC/MS method, and thus the polychlorinated naphthalene can be remained on the alumina layer and the carbon material layer. Therefore, a sample for analysis with higher reliability for the GC/MS method can be prepared using such a mixed solvent.

The hydrophilic solvent to be used as the extracting solvent is preferably dimethyl sulfoxide.

The carbon material layer to be used in this preparation method is usually made of a carbon material which has a specific surface area of 10 to 2,000 m²/g and a pore size of 7 to 500 angstroms. For example, the carbon material used herein has a particles size of 10 to 500 µm in diameter. In one embodiment in the case of using a carbon material layer made of a carbon material having the particle size within the above range, toluene is used as the extracting solvent, and the alumina layer and the carbon material layer are respectively heated to a temperature within a range from 60 to 90°C. In this case, dioxins trapped in the alumina layer and the carbon material layer can be quickly extracted with a smaller amount of toluene and therefore a small amount of a sample for analysis more suited to analysis by the GC/MS method can be obtained.

In another embodiment in the case of using a carbon material layer made of a carbon material having the particle size within the above range, the hydrophilic solvent is used as the extracting solvent, and the alumina layer and the carbon material layer are respectively heated to a temperature within a range from 50 to 70°C. In this case, dioxins trapped in the alumina layer and the carbon material layer can be extracted quickly with a smaller amount of hydrophilic solvent and therefore a small amount of a sample for analysis suited to analysis by the bioassay method can be obtained.

In another embodiment in the case of using a carbon material layer made of a carbon material having the particle size within the above range, the above mixed solvent is used as the extracting solvent, and the alumina layer and the carbon material layer are respectively heated to a temperature within a range from 50 to 62°C. In this case, since it becomes more difficult that polychlorinated naphthalene, which may be trapped together with dioxins on the alumina layer and the carbon material layer, is extracted with the extracting solvent, a sample for analysis with higher reliability for the GC/MS method can be prepared.

In the method for preparing a sample for analysis of the present invention, the alumina layer is preferably placed on the carbon material layer.

In the method for preparing a sample for analysis of the present invention, it is allowable to include the steps of supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.

In this case, since the aliphatic hydrocarbon solvent solution of dioxins is purified in the silica gel layer before being supplied to the alumina layer, dioxins trapped in the alumina layer and the carbon material layer can be extracted quickly with a smaller amount of the extracting solvent.

Usually, the silica gel layer is preferably a layer in which an active silica gel, a silver nitrate silica gel and a sulfuric acid silica gel are placed in a multi-layered state.

An apparatus for preparing a sample for analysis of dioxins from an aliphatic hydrocarbon solvent solution of dioxins according to the present invention includes a first column packed with a silica gel layer; a second column packed with an alumina layer and a carbon material layer in a layered state; a supply passage for supplying the aliphatic hydrocarbon solvent solution to the first column; a first solvent supply section for supplying an aliphatic hydrocarbon solvent to the first column; a column communicating passage for supplying the aliphatic hydrocarbon solvent from the first column to the second column from the alumina layer side; a second solvent supply section for supplying one extracting solvent selected from the group consisting of toluene, a mixed solvent of toluene and an aliphatic hydrocarbon solvent, and a hydrophilic solvent capable of dissolving the dioxins to the second column from the carbon material layer side; and a discharge passage for discharging the extracting solvent passed through the second column.

In this preparation apparatus, dioxins in the aliphatic hydrocarbon solvent solution supplied to the first column through the supply passage are dissolved in the aliphatic hydrocarbon solvent to be supplied to the first column from the first solvent supply section, thereby pass through the first column, together with the aliphatic hydrocarbon solvent. In this case, a portion of impurities contained in the aliphatic hydrocarbon solvent solution are trapped by the silica gel layer and thus stayed in the first column. The aliphatic hydrocarbon solvent supplied to the second column through the column communicating passage after passing through the first column passes trough the alumina layer and the carbon material layer in this order in the second column. In this case, most of dioxins dissolved in the aliphatic hydrocarbon solvent are trapped by the alumina layer. Also, dioxins remained in the aliphatic hydrocarbon solvent passed through the alumina layer are trapped by the carbon material layer when the aliphatic hydrocarbon solvent passes through the carbon material layer. Therefore, dioxins contained in the aliphatic hydrocarbon solvent solution are trapped by either the alumina layer or the carbon material layer, and the aliphatic hydrocarbon solvent passed through the carbon material layer is discharged from the second column in the state of containing substantially no dioxins.

When the extracting solvent is supplied to the second column from the second solvent supply section after the aliphatic hydrocarbon solvent passed through the second column, dioxins retained in the second column are extracted with the extracting solvent. Herein, since most of dioxins are supported in the alumina layer of the second column, when the extracting solvent is supplied to the second column from the carbon material layer side, thereby passing the extracting solvent through the carbon material layer and the alumina layer in this order, dioxins retained respectively in the carbon material layer and the alumina layer are quickly extracted. Therefore, when an initial flow portion of the extracting solvent to be discharged through the discharge passage is mainly secured, a sample for analysis of dioxins can be obtained.

Herein, when toluene, or a mixed solvent of toluene and the aliphatic hydrocarbon solvent is used as the extracting solvent, a sample for analysis of dioxins suited to analysis by the GC/MS method can be obtained. In contrast, when a hydrophilic solvent is used as the extracting solvent, a sample for analysis of dioxins suited to analysis by the bioassay method can be obtained.

In this apparatus, it is preferred that the second column stands vertically so as to constitute the lower layer with the carbon material layer, and is also disposed below the first column. In this case, the aliphatic hydrocarbon solvent passed through the first column flows to the second column on the downstream side from the first column, thereby passes through the second column in the downstream direction. Therefore, dioxins contained in the aliphatic hydrocarbon solvent from the first column are easily trapped at the upper portion of the alumina layer, mainly. Thus, it becomes easier to extract dioxins trapped in the second column with the extracting solvent to be supplied to the second column from the carbon material layer side.

A column for preparing a sample for analysis of dioxins of the present invention includes a cylindrical container having an opening portion at both ends, a carbon material layer packed in the container, and an alumina layer packed adjacent to the carbon material layer in the container. The carbon material layer used herein is usually made of a carbon material having a specific surface area of 10 to 2,000 m²/g and a pore size of 7 to 500 angstroms. Also, the carbon material layer has a particle size of 10 to 500 µm in daimeter, for example.

When the aliphatic hydrocarbon solvent solution of dioxins is supplied to the column from the alumina layer side, dioxins in the aliphatic hydrocarbon solvent solution are trapped in the alumina layer and the carbon material layer and the aliphatic hydrocarbon solvent, from which dioxins have been removed, is discharged from the carbon material layer side. Therefore, this column can be utilized in the method and the apparatus for preparing a sample for analysis of dioxins according to the present invention.

A method for analyzing dioxins according to the present invention includes the steps of: supplying an aliphatic hydrocarbon solvent solution of dioxins to an alumina layer; supplying an aliphatic hydrocarbon solvent to the alumina layer, to which the aliphatic hydrocarbon solvent solution of dioxins has been supplied, thereby passing the aliphatic hydrocarbon solvent through the alumina layer; supplying the aliphatic hydrocarbon solvent passed through the alumina layer to a carbon material layer, thereby passing the aliphatic hydrocarbon solvent through the carbon material layer; supplying one extracting solvent selected from the group consisting of toluene and a mixed solvent of toluene and an aliphatic hydrocarbon solvent to the carbon material layer and the alumina layer after passing the aliphatic hydrocarbon solvent through the carbon material layer, in the direction opposed to the passing direction of the aliphatic hydrocarbon solvent; and injecting a solution of the extracting solvent obtained by passing through the carbon material layer and the alumina layer in this order to a gas chromatograph-mass spectrometer as it is, thereby analyzing the dioxins.

In this analysis method, most of dioxins in the aliphatic hydrocarbon solvent solution supplied to the alumina layer are trapped in the alumina layer when the aliphatic hydrocarbon solvent is supplied to the alumina layer, thereby passing the aliphatic hydrocarbon solvent through the alumina layer. Also, when the aliphatic hydrocarbon solvent passed through the alumina layer is supplied to the carbon material layer, thereby passing the aliphatic hydrocarbon solvent through the carbon material layer, a portion of dioxins, which were not trapped in the alumina layer, are trapped in the carbon material layer. Therefore, dioxins contained in the aliphatic hydrocarbon solvent solution are trapped with either the alumina layer or the carbon material layer, resulting in the state where the dioxins are not substantially contained in the aliphatic hydrocarbon solvent passed through the carbon material layer.

When the extracting solvent is supplied to the carbon material layer and the alumina layer after passing the aliphatic hydrocarbon solvent through the carbon material layer, dioxins retained in the carbon material layer and the alumina layer are extracted with the extracting solvent. Herein, since most of dioxins are retained in the alumina layer, when the extracting solvent is supplied in the direction opposed to the passing direction of the aliphatic hydrocarbon solvent, thereby passing the extracting solvent through the carbon material layer and the alumina layer in this order, dioxins retained respectively in the carbon material layer and the alumina layer are quickly extracted with a small amount of the extracting solvent. Therefore, it is not required that the extracting solvent, with which dioxins were extracted from the carbon material layer and the alumina layer, is concentrated, and the extracting solvent can be directly injected into a gas chromatograph-mass spectrometer. As a result, according to this analysis method, the step of preparing a sample for analysis to the step of analyzing dioxins by the GC/MS method can be continuously carried out, easily and quickly.

In this analysis method, it is allowable to include, for example, the steps of supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.

In this case, since the aliphatic hydrocarbon solvent solution of dioxins is purified before being supplied to the alumina layer, dioxins trapped in the alumina layer and the carbon material layer can be quickly extracted with a smaller amount of the extracting solvent.

A method for analyzing dioxins according to another viewpoint of the present invention includes the steps of supplying the aliphatic hydrocarbon solvent solution of dioxins to an alumina layer; supplying an aliphatic hydrocarbon solvent to the alumina layer, to which the aliphatic hydrocarbon solvent solution of dioxins has been supplied, thereby passing the aliphatic hydrocarbon solvent through the alumina layer; supplying the aliphatic hydrocarbon solvent passed through the alumina layer to a carbon material layer, thereby passing the aliphatic hydrocarbon solvent through the carbon material layer; supplying a hydrophilic solvent capable of dissolving the dioxins to the carbon material layer and the alumina layer after passing the aliphatic hydrocarbon solvent through the carbon material layer in the direction opposed to the passing direction of the aliphatic hydrocarbon solvent, thereby securing a solution of the hydrophilic solvent obtained by passing through the carbon material layer and the alumina layer in this order; and analyzing the dioxins contained in the solution of the hydrophilic solvent using a bioassay method.

In this analysis method, when the aliphatic hydrocarbon solvent is supplied to the alumina layer, thereby passing the aliphatic hydrocarbon solvent through the alumina layer, most of dioxins in the aliphatic hydrocarbon solvent solution supplied to the alumina layer are trapped in the alumina layer. Also, when the aliphatic hydrocarbon solvent passed through the alumina layer is supplied to the carbon material layer, thereby passing the aliphatic hydrocarbon solvent through the carbon material layer, a portion of dioxins, which were not trapped in the alumina layer, are trapped in the carbon material layer. Therefore, the dioxins contained in the aliphatic hydrocarbon solvent solution are trapped by either the alumina layer or the carbon material layer, resulting in the state where the dioxins are not substantially contained in the aliphatic hydrocarbon solvent solution passed through the carbon material layer.

After passing the aliphatic hydrocarbon solvent through the carbon material layer, when a hydrophilic solvent is supplied to the carbon material layer and the alumina layer, dioxins retained in the carbon material layer and the alumina layer are extracted with the hydrophilic solvent. Herein, since most of dioxins are retained in the alumina layer, when the hydrophilic solvent is supplied in the direction opposed to the passing direction of the aliphatic hydrocarbon solvent, thereby passing the hydrophilic solvent through the carbon material layer and the alumina layer in this order, dioxins retained respectively in the carbon material layer and the alumina layer are extracted quickly with a small amount of the hydrophilic solvent. Accordingly, the hydrophilic solvent, which has extracted dioxins from the carbon material layer and the alumina layer, can be used in a bioassay method as it is. Therefore, according to this analysis method, analysis of dioxins by the bioassay method can be carried out, easily and quickly.

In this analysis method, it is allowable to include the steps of supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.

In this case, since the aliphatic hydrocarbon solvent solution of dioxins is purified in the silica gel layer before being supplied to the alumina layer, dioxins trapped in the alumina layer and the carbon material layer can be extracted quickly with a smaller amount of the extracting solvent.

Other objects and effects of the present invention will be described in the following detailed description.

### Brief Description of the Drawings

Fig. 1 is a schematic view showing an apparatus for preparing a sample for analysis of dioxins according to Embodiment 1 of the present invention.
Fig. 2 is a schematic view showing an apparatus for preparing a sample for analysis of dioxins according to Embodiment 2 of the present invention.
Fig. 3 is a schematic view showing a modification of a column for preparing a sample which can be used in the above respective embodiments.

### Best Mode for Carring out the Invention

### Embodiment 1

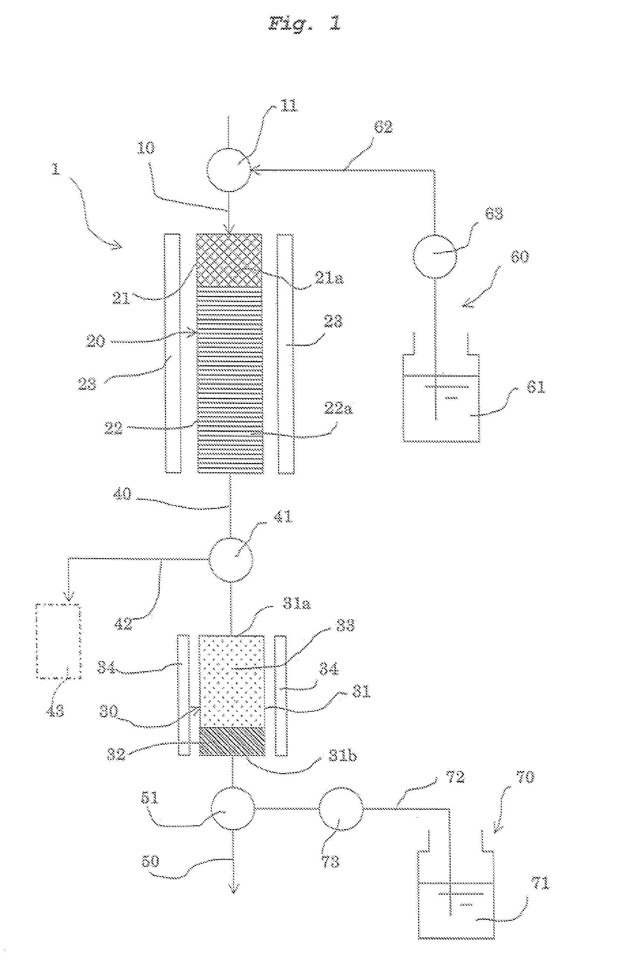

One aspect of an apparatus for preparing a sample for analysis of dioxins according to the present invention will be described with reference to Fig. 1. In the figure, a preparation apparatus 1 is an apparatus for preparing a sample of dioxins suited to analysis by a GC/MS method, which mainly includes a sample supply passage (one example of a supply passage) 10, a purification column 20, a sample-preparation column 30 (one example of a second column), a column communicating passage 40, a solvent discharge passage 50, a first solvent supply section 60 and a second solvent supply section 70.

The sample supply passage 10 is a passage for supplying an aliphatic hydrocarbon solvent solution of dioxins described later to the purification column 20, and has a first selector valve 11.

The purification column 20 is a column in which two columns, a preceding column 21 and a subsequent column 22 (one example of a first column) are vertically connected, and is disposed in a upright state. Also, a fist heating device 23 for heating the entire preceding column 21 and subsequent column 22 is disposed around the purification column 20.

The preceding column 21 is opened in a vertical direction and to the upper opening portion thereof the sample supply passage 10 is connected. The preceding column 21 is packed with a granular supporting material 21a for temporarily supporting the aliphatic hydrocarbon solvent solution from the sample supply passage 10. As the supporting material 21a, various materials can be used so long as they can support the aliphatic hydrocarbon solvent solution in the interstices between particles and also can elute dioxins in the aliphatic hydrocarbon solvent solution when an aliphatic hydrocarbon solvent to be described later is supplied to them. For example, a silica gel, alumina, diatomaceous earth and sodium sulfate are preferably used. Two or more kinds of these supporting materials 21a may be used in combination, if necessary.

On the other hand, the subsequent column 22 is a column for removing a portion of components (impurities) other than dioxins from the aliphatic hydrocarbon solvent solution, and is opened in a vertical direction. The subsequent column is packed with a silica gel-based filler 22a. The silica gel-based filler 22a is not specifically limited so long as it can trap a portion of impurities contained in the aliphatic hydrocarbon solvent solution, particularly impurities other than polychlorinated naphthalene. Usually, it is preferred to use a silica gel, an active silica gel, a silver nitrate silica gel or a sulfuric acid silica gel. Two or more kinds of these silica gel-based fillers 22a may be used in combination. In this case, the subsequent column 22 may be packed with two or more kinds of the silica gel-based fillers 22a in a mixed state, or may be packed with two or more kinds of the silica gel-based fillers in a multi-layered state. The silica gel-based filler 22a is particularly preferably used in the state where an active silica gel, a silver nitrate silica gel and a sulfuric acid silica gel are disposed in a multi-layered state. Such a multilayer silica gel-based filler 22a may contain two or more layers of an active silica gel, a silver nitrate silica gel and a sulfuric acid silica gel respectively.

The sample-preparation column 30 mainly includes a cylindrical container 31 having opening portions 31a, 31b at both ends, a carbon material layer 32 packed in the container 31, and an alumina layer 33 packed in the container 31 in the state of being placed on the carbon material layer 32. The sample-preparation column 30 is disposed below the purification column 20 in a upright state. Also, a second heating device 34 for heating the sample-preparation column 30 is disposed around the sample-preparation column 30.

Although the size of the container 31 is not specifically limited, usually, a container having an inner diameter of 4 to 10 mm and a length of 20 to 100 mm is preferred.

The carbon material layer 32 is not specifically limited so long as it is made of a carbon material capable of adsorbing dioxins. Usually, the carbon material layer 32 is made of a carbon material which has a specific surface area within a range from 10 to 2,000 m²/g, preferably from 1,000 to 1,500 m²/g, more preferably from 1,300 to 1,450 m²/g, and a pore size within a range from 7 to 500 angstroms, preferably from 7 to 20 angstroms. Herein, the specific surface area is obtained by measuring using a nitrogen gas adsorption method and analyzing the measured value using a BET method. On the other hand, the pore size means a diameter obtained by measuring using a nitrogen gas adsorption method and analyzing the measured value using a CI method.

The carbon material used herein preferably has a particle size within a range from 10 to 500 µm in diameter, and particularly preferably from 30 to 300 µm in diameter. This particle size is measured in accordance with Japan Industrial Standards Z8801: 2000.

Examples of the carbon material satisfying these conditions include trade names "Kuraraycoal GW-h" (specific surface area = 1,300 to 1,450 m²/g, pore size = 7 to 20 angstroms, particle size = 234 µm in diameter) and "Kuraraycoal PK-DN" (specific surface area = 1,380 m²/g, pore size = 12 to 16 angstroms, particle size = 45 µm in diameter) manufactured by Kuraray Co., Ltd.; and trade names "Carboxen 1000" (specific surface area = 1,200 m²/g, pore size = 10 to 12 angstroms, particle size = 210 µm in diameter) and "Carboxen 1012" (specific surface area = 1,500 m²/g, pore size = 19 to 21 angstroms, particle size = 150 µm in diameter) manufactured by SPELCO USA.

When a container having the above size is used as the container 31, the packing amount of the carbon material layer 32 is usually preferably set within a range from 60 to 100 mg. In this case, the packing height and the packing density of the carbon material layer 32 in the container 31 are preferably set within a range from 4 to 6 mm and 0.00015 to 0.00060 g/mm³, respectively.

On the other hand, the alumina layer 33 is not specifically limited so long as it is made of alumina capable of adsorbing dioxins, and any of basic alumina, neutral alumina and acidic alumina can be used. As the alumina, various ones each having a different activity can be used. The alumina used herein is preferably the basic alumina of trade name "ICN Alumina B-Super I for Dioxin Analysis" manufactured by ICN Biomedicals, Inc.

When a container having the above size is used as the container 31, usually, the packing amount of the alumina layer 33 is preferably set within a range from 500 to 600 mg. In this case, the packing height and the packing density of the alumina layer 33 in the container 31 are preferably set within a range from 18 to 21 mm and 0.00015 to 0.0010 g/mm³, respectively.

The column communicating passage 40 is a passage for communicating the subsequent column 22 of the purification column 20 with the sample-preparation column 30, and one end thereof is connected to an opening portion of the lower side of the subsequent column 22, while the other end is connected to the opening portion 31a of the upper side of the sample-preparation column 30. Also, the column communicating passage 40 has a second selector valve 41. One end of a sample-discharge passage 42 (one example of a discharge passage) is connected to the second selector valve 41 and the other end of the sample-discharge passage 42 is opened.

The solvent-discharge passage 50 extends from the opening portion 31b of the lower end side of the sample-preparation column 30 and has a third selector valve 51, and also the end is opened. At the end of the solvent-discharge passage 50, a solvent recovery tank (not shown in the figure) is disposed.

The first solvent supply section 60 includes a first solvent tank 61, and a first solvent supply passage 62 extending from the first solvent tank 61. The first solvent tank 61 is a tank for pooling an aliphatic hydrocarbon solvent, and has a third heating device (not shown in the figure) for warming the aliphatic hydrocarbon solvent with heating. Also, the first solvent supply passage 62 communicates with the first selector valve 11, and includes a first pump 63 for pumping out the aliphatic hydrocarbon solvent in the first solvent tank 61 toward the first selector valve 11.

The aliphatic hydrocarbon solvent to be pooled in the first solvent tank 61 is not specifically limited, and is preferably a non-polar solvent having 5 to 10 carbon atoms, for example, n-hexane, isooctane, nonane and decane. Particularly, n-hexane is preferred. The aliphatic hydrocarbon solvent may be the same as or different from the aliphatic hydrocarbon solvent to be used in an aliphatic hydrocarbon solvent solution of dioxins to be described later.

The second solvent supply section 70 includes a second solvent tank 71, and a second solvent supply passage 72 extending from the second solvent tank 71. The second solvent tank 71 is a tank for pooling toluene to be used as a solvent for extracting dioxins from the second column 30, and has a fourth heating device (not shown in the figure) for warming the pooled toluene with heating. Also, the second solvent supply passage 72 communicates with the third selector valve 51, and includes a second pump 73 for pumping out toluene in the second solvent tank 71 toward the third selector valve 51.

In the above preparation apparatus 1, the first selector valve 11 is a valve for changing a flow passage to communication between the sample supply passage 10 and the preceding column 21, or communication between the first solvent supply passage 62 and the preceding column 21. Also, the second selector valve 41 is a valve for changing a flow passage to communication between the subsequent column 22 and the sample-preparation column 30, or communication between the sample-preparation column 30 and the sample-discharge passage 42. Furthermore, the third selector valve 51 is a valve for changing a flow passage to communication between the sample-preparation column 30 and the solvent-discharge passage 50, or communication between the second solvent supply passage 72 and the sample-preparation column 30.

Next, the method for preparing a sample for analysis of dioxins using the above preparation apparatus 1 will be described. First, the first selector valve 11, the second selector valve 41 and the third selector valve 51 are set at a predetermined initial state. Namely, the first selector valve 11 is set so as to communicate the sample supply passage 10 with the preceding column 21. The second selector valve 41 is set so as to communicate the subsequent column 22 with the sample-preparation column 30. The third selector valve 51 is set so as to communicate the sample-preparation column 30 with the solvent-discharge passage 50. Also, the first heating device 23, the second heating device 34, the third heating device (not shown in the figure) and the fourth heating device (not shown in the figure) are operated, thereby heating the purification column 20, the sample-preparation column 30, an aliphatic hydrocarbon solvent pooled in the first solvent tank 61 and toluene pooled in the second solvent tank 71. Herein, the heating temperature of the purification column 20 is usually preferably set within a range from 50 to 62°C, and particularly preferably from 58 to 60°C. The heating temperature of the aliphatic hydrocarbon solvent pooled in the first solvent tank 61 is preferably set similar to the heating temperature of the purification column 20. The heating temperature of the sample-preparation column 30, namely, the heating temperature of a carbon material layer 32 and an alumina layer 33 is usually preferably set within a range from 60 to 90°C, and particularly preferably from 70 to 85°C. The heating temperature of toluene pooled in the second solvent tank 71 is preferably set similar to the heating temperature of the sample-preparation column 30.

Then, an aliphatic hydrocarbon solvent solution of dioxins is supplied to the sample supply passage 10. The aliphatic hydrocarbon solvent solution of dioxins to be supplied herein is based on, for example, an extract solution prepared by collecting dioxins contained in a fluid such as an exhaust gas emitted from waste incineration facilities, or a factory effluent water using the apparatus described in Japan Industrial Standards JIS K 0311: 2005 revised on June 20, 2005 (aforementioned Document 4) or the filter described in Japanese Patent No. 3,273,796 (aforementioned Document 6), International Publication WO01/91883 (aforementioned Document 7) or Japanese Unexamined Patent Publication (Kokai) No. 2004-53388 (aforementioned Document 8) and extracting the collected dioxins with an organic solvent, or an extract solution prepared by extracting dioxins contained in the soil or fly ash with an organic solvent. These extract solutions can be usually utilized as the above aliphatic hydrocarbon solvent solution as they are if they are obtained by extracting dioxins in a specimen such as a fluid, soil or fly ash employing the above-described operation using a aliphatic hydrocarbon solvent. In contrast, when these extract solutions are obtained by extracting with another organic solvent, for example, an aromatic hydrocarbon solvent such as toluene, they can be utilized as the above aliphatic hydrocarbon solvent solution by replacing the aromatic hydrocarbon solvent or the like used for extraction by an aliphatic hydrocarbon solvent. Herein, the aliphatic hydrocarbon solvent used for extraction or solvent replacement is usually preferably an aliphatic hydrocarbon solvent having 5 to 10 carbon atoms, and particularly preferably a non-polar aliphatic hydrocarbon solvent, for example, n-hexane, isooctane, nonane and decane. Of these solvents, n-hexane is particularly preferred because it is inexpensive.

The amount of the aliphatic hydrocarbon solvent solution of dioxins to be supplied to the sample supply passage 10 varies depending on the amount of the aliphatic hydrocarbon solvent to be used upon the above extraction or solvent replacement, but is usually from about 80 to 90 ml.

The aliphatic hydrocarbon solvent solution of dioxins supplied to the sample supply passage 10 is supplied to the preceding column 21 of the purification column 20 through the sample supply passage 10, and then supported in the supporting material 21a. When the whole amount of the aliphatic hydrocarbon solvent solution is supplied to the preceding column 21, the first selector valve 11 is operated so as to communicate the first solvent supply passage 62 with the preceding column 21, and also a first pump 63 is operated. Thereby, the aliphatic hydrocarbon solvent in the first solvent tank 61 is continuously supplied to the preceding column 21 through the first solvent supply passage 62 and a portion of the sample supply passage 10.

The aliphatic hydrocarbon solvent supplied to the preceding column 21 at the initial stage is mixed with the aliphatic hydrocarbon solvent solution of dioxins supported in the supporting material 21a of the preceding column 21, and then transferred to the subsequent column 22. As a result, the aliphatic hydrocarbon solvent solution of dioxins is supplied to the subsequent column 22. In this case, when a silica gel or alumina is used as the supporting material 21a of the preceding column 21, a portion of impurities contained in the aliphatic hydrocarbon solvent solution are trapped in the supporting material 21a. Namely, the aliphatic hydrocarbon solvent solution is subjected to a preliminary purification treatment in the preceding column 21.

The aliphatic hydrocarbon solvent to be continuously supplied to the preceding column 21 from the first solvent tank 61 is supplied to the subsequent column 22 through the preceding column 21. The aliphatic hydrocarbon solvent supplied to the subsequent column 22 passes therethrough while dissolving dioxins in the aliphatic hydrocarbon solvent solution supplied to the subsequent column 22. In this case, impurities contained in the aliphatic hydrocarbon solvent solution are trapped by the silica gel-based filler 22a. Namely, the aliphatic hydrocarbon solvent solution is subjected to a purification treatment in the subsequent column 22.

In the above processes, the amount of the aliphatic hydrocarbon solvent to be supplied from the first solvent tank 61 is set so as to enable the whole amount of dioxins contained in the aliphatic hydrocarbon solvent solution supplied to the purification column 20 to be discharged from the purification column 20. Thereby, the aliphatic hydrocarbon solvent to be supplied from the first solvent tank 61 continuously flows to the column communicating passage 40 from the subsequent column 22 as a purified solution in which substantially the whole amount of dioxins contained in the aliphatic hydrocarbon solvent solution supplied to the subsequent column 22 is dissolved. This purified solution is an aliphatic hydrocarbon solvent which contains substantially the whole amount of dioxins contained in the above aliphatic hydrocarbon solvent solution.

The purified solution from the subsequent column 22 passes through the column communicating passage 40 and then continuously supplied into the sample-preparation column 30 from the opening portion 31a. In this case, the aliphatic hydrocarbon solvent is continuously supplied to the purification column 20 from the first solvent tank 61. This aliphatic hydrocarbon solvent passes through the purification column 20 and the column communicating passage 40 and then continuously supplied in the sample-preparation column 30. Hereinafter, the purified solution and the aliphatic hydrocarbon solvent to be continuously supplied from the first solvent tank 61 are generically referred to as a "primary treatment solution".

The rate of the primary treatment solution to be supplied to the sample-preparation column 30 is preferably set within a range from 1 to 5 ml/min, and particularly preferably 2.5 ml/min. The supply rate of the primary treatment solution can be set by controlling the rate of the aliphatic hydrocarbon solvent to be supplied to the purification column 20 from the first solvent tank 61, using the first pump 63.

The primary treatment solution supplied in the sample-preparation column 30 passes through the alumina layer 33 and the carbon material layer 32 in this order. In this case, most of dioxins in the primary treatment solution, namely, PCDDs, PCDFs and Co-PCBs are trapped in the alumina layer 33. Also, a portion of dioxins, which are not trapped in the alumina layer 33 and remained in the primary treatment solution passed through the alumina layer 33, are trapped in the carbon material layer 32 when the primary treatment solution passes through the carbon material layer 32. As a result, substantially the whole amount of dioxins contained in the primary treatment solution is trapped in the alumina layer 33 and the carbon material layer 32. Therefore, substantially the aliphatic hydrocarbon solvent contained in the primary treatment solution only is discharged from the sample-preparation column 30, and the discharged aliphatic hydrocarbon solvent is recovered in the solvent recovery tank (not shown in the figure) through the solvent discharge passage 50. For convenience, the above steps are referred to as a "sample supply step".

Then, the second selector valve 41 is operated and set so as to communicate the sample-preparation column 30 with the sample-discharge passage 42. Furthermore, the third selector valve 51 is operated and set so as to communicate the second solvent supply passage 72 with the sample-preparation column 30. When the second pump 73 is operated in this state, toluene pooled in the second solvent tank 71 is continuously supplied to the upper end side from the lower end side of the sample-preparation column 30 after passing through the second solvent supply passage 72, the third selector valve 51 and a portion of the solvent-discharge passage 50. Namely, toluene is supplied in the direction opposed to the passing direction of the primary treatment solution in the sample-preparation column 30. In this case, the rate of toluene supplied to the sample-preparation column 30 is usually preferably set within a range from 1 to 5 ml/min, and particularly preferably 2.5 ml/min by controlling the operation of the second pump 73.

Toluene thus supplied to the sample-preparation column 30 passes through the carbon material layer 32 and the alumina layer 33 in this order in the sample-preparation column 30, and then is gradually discharged through the sample-discharge passage 42 as a toluene solution of dioxins while extracting dioxins supported in the carbon material layer 32 and the alumina layer 33. Therefore, when a toluene solution to be discharged through the sample-discharge passage 42 is secured, it is possible to obtain a sample for analysis of dioxins.

Herein, in the sample-preparation column 30, most of dioxins are trapped in the alumina layer 33 as the upper layer and a portion of dioxins are trapped in the carbon material layer 32 as the lower layer, and thus dioxins trapped in both layers are extracted with a small amount of toluene to be supplied through the second solvent supply passage 72, easily and quickly. Therefore, in the toluene solution to be discharged through the sample-discharge passage 42, the initial flow portion has a high concentration of dioxins and the concentration of dioxins quickly decreases to a substantially zero level in the following portion. Therefore, a tiny amount of only an initial flow portion of the toluene solution can be used as a sample for analysis. For example, when the total amount of a primary treatment solution is about 85 ml, the amount of the toluene solution obtained as the sample for analysis is drastically reduced to a very small amount within a range from about 0.5 to 2.0 ml, resulting in the state of drastically concentrated to the primary treatment solution.

Therefore, the thus obtained sample for analysis can be injected into a GC/MS as it is without being concentrated.

The GC/MS used herein may be either a high-resolution GC/MS or a low-resolution GC/MS. However, since the sample for analysis sometimes contains polychlorinated naphthalene which may interfere with the analysis results, a high-resolution GC/MS capable of eliminating the interference is preferably used. Even if a low-resolution GC/MS is used, interference caused by polychlorinated naphthalene can be eliminated by selecting a capillary column or appropriately setting measuring conditions of a GC/MS.

### Modification of Embodiment 1

(1) An extracting solvent to be pooled in the second solvent tank 71 of the second solvent supply section 70 may be a mixed solvent of toluene and an aliphatic hydrocarbon solvent. While such a mixed solvent can easily extract various dioxins trapped in the carbon material layer 32, the mixed solvent cannot easily extract polychlorinated naphthalene which may be trapped in the carbon material layer 32, and thus a sample for analysis in which polychlorinated naphthalene is effectively removed can be prepared.
   The aliphatic hydrocarbon solvent used in the mixed solvent is not specifically limited, and is preferably a non-polar solvent having 5 to 10 carbon atoms, for example, n-hexane, isooctane, nonane and decane. Particularly, n-hexane is preferred. The aliphatic hydrocarbon solvent may be the same as or different from the aliphatic hydrocarbon solvent to be pooled in the first solvent tank 61.
   Also, the content of toluene in the mixed solvent is usually within a range from 1 to 10% by volume, preferably from 1.5 to 3.0% by volume, and more preferably from 1.8 to 2.3% by volume. When the content of toluene is less than 1% by volume, there is a possibility that various dioxins trapped in the carbon material layer 32 and the alumina layer 33 cannot be sufficiently extracted. In contrast, when the content of toluene is more than 10% by volume, there is a fear that polychlorinated naphthalene trapped in the carbon material layer 32 is likely to be extracted.
(2) In the preparation apparatus 1 of this embodiment, for example, as shown in Fig. 1 using a dotted line, the sample-discharge passage 42 can also be used by connecting with a sample introduction port of a GC/MS 43. In this case, since a sample for analysis from the sample-discharge passage 42 can be directly injected to the sample introduction port of the GC/MS 43, it is possible to carry out a series of an analyzing operation from the step of preparing a sample for analysis from an aliphatic hydrocarbon solvent solution of dioxins to the step of analyzing the sample for analysis using a GC/MS method on-line.

### Embodiment 2

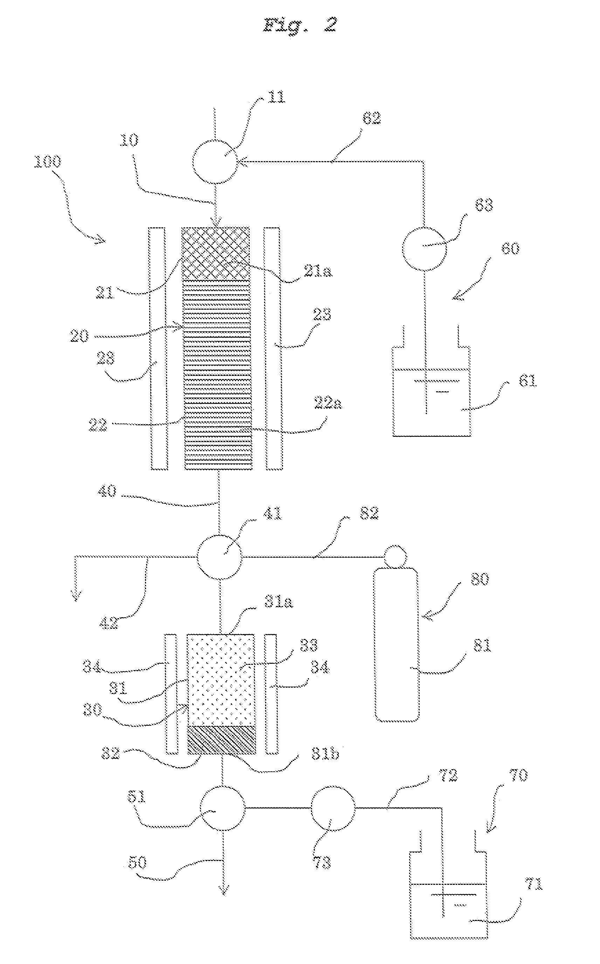

Another aspect of an apparatus for preparing a sample for analysis of dioxins according to the present invention will be described with reference to Fig. 2. In the figure, a preparation apparatus 100 is an apparatus for preparing a sample for analysis suited to analysis of dioxins by a bioassay method, which is different from the preparation apparatus 1 of Embodiment 1 in a gas supply section 80, a second selector valve 41, and an extracting solvent pooled in a second solvent tank 71. Therefore, the preparation apparatus 100 is constituted similarly to the preparation apparatus 1 of Embodiment 1, except for such differences. In Fig. 2, the same part of the preparation apparatus 1 of Embodiment 1 is expressed by the same reference numeral. Hereinafter, the difference between the preparation apparatus 100 and the preparation apparatus 1 of Embodiment 1 will be described.

The gas supply section 80 includes a gas cylinder 81 for an inert gas such as nitrogen, and a gas supply pipe 82 which extends from the gas cylinder 81 and is also connected to the second selector valve 41.

The second selector valve 41 is a valve for changing a flow passage to communication between a purification column 20 and a sample-preparation column 30, communication between the gas supply pipe 82 and the sample-preparation column 30, or communication between the sample-preparation column 30 and a sample-discharge passage 42.

The extracting solvent pooled in the second solvent tank 71 is a hydrophilic solvent. The hydrophilic solvent used herein is not specifically limited so long as it can dissolve dioxins, but is usually dimethyl sulfoxide (DMSO), methanol or the like. It is particularly preferred to use dimethyl sulfoxide. Also, dimethyl sulfoxide may contain a surfactant added therein. Examples of the surfactant used herein include polyoxyethylene (20) sorbitan monolaurate (for example, manufactured by Uniqema Co. under the trade name of "Tween 20") and polyoxyethylene (10) octyl phenyl ether (for example, manufactured by Union Carbide Corporation under the trade name of "Triton X-100"). The amount of the surfactant to be added is usually preferably set within a range from 0.001 to 1.0% by weight, and more preferably from 0.01 to 0.20% by weight, in terms of the concentration.

Next, the method for preparing a sample for analysis of dioxins using the above preparation apparatus 100 will be described. This preparation method is the same as in Embodiment 1 up to the sample supply step. Therefore, steps following the sample supply step are described here.

After the sample supply step, the second selector valve 41 is operated so as to communicate the gas supply pipe 82 with the sample-preparation column 30, and then an inert gas is supplied to the gas supply pipe 82 from the gas cylinder 81. The inert gas supplied to the gas supply pipe 82 is supplied to the sample-preparation column 30 after passing through a portion of a column communicating passage 40 from the second selector valve 41. The inert gas supplied to the sample-preparation column 30 is discharged to the outside through a solvent-discharge passage 50 after passing through the sample-preparation column 30. In this case, the aliphatic hydrocarbon solvent remaining in the sample-preparation column 30 is discharged to the outside together with the inert gas, after being volatilized in the inert gas passing through the sample-preparation column 30. As a result, an alumina layer 33 and a carbon material layer 32 packed in the sample-preparation column 30 are subjected to a drying treatment, resulting in the state where the layers do not substantially contain the aliphatic hydrocarbon solvent.

Then, the second selector valve 41 is operated so as to communicate the sample-preparation column 30 with the sample-discharge passage 42. Furthermore, a third selector valve 51 is operated so as to communicate a second solvent supply passage 72 with the sample-preparation column 30. When a second pump 73 is operated in this state, the hydrophilic solvent pooled in the second solvent tank 71 is continuously supplied to the upper end side from the lower end side of the sample-preparation column 30 after passing through the second solvent supply passage 72, the third selector valve 51 and a portion of the solvent-discharge passage 50. Namely, the hydrophilic solvent is supplied in the direction opposed to the passing direction of the primary treatment solution in the sample-preparation column 30. The rate of the hydrophilic solvent supplied to the sample-preparation column 30 is usually preferably set within a range from 1 to 5 ml/min, and particularly preferably 2.5 ml/min by controlling the operation of the second pump 73.

In this case, the heating temperature of the sample-preparation column 30, namely, the heating temperature of the alumina layer 33 and the carbon material layer 32 is usually preferably set within a range from 50 to 70°C, and particularly preferably from 58 to 62°C. The heating temperature of the hydrophilic solvent pooled in the second solvent tank 71 is preferably set similar to the heating temperature of the sample-preparation column 30.

The hydrophilic solvent supplied to the sample-preparation column 30 passes through the carbon material layer 32 and the alumina layer 33 in this order in the sample-preparation column 30 and then gradually discharged through the sample-discharge passage 42 while extracting dioxins supported in the carbon material layer 32 and the alumina layer 33. In this case, polychlorinated naphthalene exerting an influence on the analysis of dioxins, which may be trapped in the carbon material layer 32 together with dioxins, is not easily extracted with the hydrophilic solvent from the carbon material layer 32. Therefore, when a solution of the hydrophilic solvent to be discharged through the sample-discharge passage 42 is secured, it is possible to obtain a sample for analysis of dioxins in which polychlorinated naphthalene is substantially removed.

Herein, in the sample-preparation column 30, most of dioxins are trapped in the alumina layer 33 and a portion of dioxins are trapped in the carbon material layer 32, and thus dioxins trapped in both layers are extracted with a small amount of the hydrophilic solvent to be supplied through the second solvent supply passage 72, easily and quickly. Therefore, in the solution of the hydrophilic solvent to be discharged through the sample-discharge passage 42, the initial flow portion has a high concentration of dioxins and the concentration of dioxins quickly decreases to a substantially zero level in the following portion. As a result, tiny amount of only an initial flow portion of the solution of the hydrophilic solvent can be used as a sample for analysis. For example, when the total amount of a primary treatment solution is about 85 ml, the amount of the solution of the hydrophilic solvent obtained as the sample for analysis is drastically reduced to a very small amount within a range from about 0.5 to 1.0 ml, resulting in the state of drastically concentrated to the primary treatment solution.

Since the thus obtained sample for analysis is a hydrophilic sample in which polychlorinated naphthalene working as a component of interfering the analysis of dioxins has been substantially removed, when an immunoassay method such as an ELISA method, or a bioassay method such as an EROD method or a DR-CALUX method is applied, the measurement results with high reliability to the concentration of dioxins and the TEQ value can be obtained.

### Other Embodiments

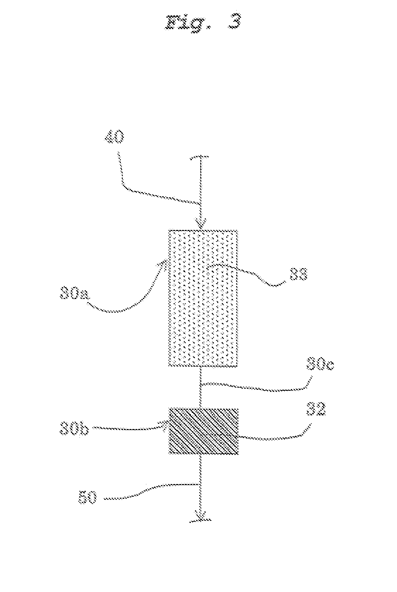

(1) In the above respective embodiments, while the sample-preparation column 30 and the second solvent tank 71 are respectively heated by the second heating device 34 and the fourth heating device (not shown in the figure), they may not be heated. Usually, dioxins supported in the sample-preparation column 30 can be efficiently extracted with a smaller amount of the extracting solvent when the sample-preparation column 30 and the second solvent tank 71 are heated.
(2) In the above respective embodiments, while the purification column 20 and the first solvent tank 61 are respectively heated by the first heating device 23 and the third heating device (not shown in the figure), they may not be heated. Usually, the whole amount of dioxins supported in the purification column 20 can be eluted in the sample-preparation column 30 with a smaller amount of the aliphatic hydrocarbon solvent when the purification column 20 and the first solvent tank 61 are heated. Thus, the aliphatic hydrocarbon solvent can be saved.
(3) In the above respective embodiments, the sample-preparation column 30, in which one container 31 is packed with the alumina layer 33 and the carbon material layer 32 in a layered state, is used. However, as the sample-preparation column 30, as shown in Fig. 3, a first sample-preparation column 30a packed with the alumina layer 33 and a second sample-preparation column 30b packed with the carbon material layer 32 may be separately prepared, and both columns 30a, 30b may be connected with each other with a communicating passage 30c. In this case, the column communicating passage 40 and the solvent-discharge passage 50 are respectively connected to the upper opening portion of the first sample-preparation column 30a and the lower opening portion of the second sample-preparation column 30b, and the aliphatic hydrocarbon solvent from the purification column 20 is passed through the first sample-preparation column 30a and the second sample-preparation column 30b in this order. Also, the extracting solvent from the second solvent supply section 70 is passed through the second sample-preparation column 30b and the first sample-preparation column 30a in this order.
(4) In the above respective embodiments, while the purification column 20 is composed of two columns, the preceding column 21 and the subsequent column 22, the present invention can be carried out in the same manner even if the preceding column 21 is omitted. The preceding column 21 is usually preferably employed because impurities contained in the aliphatic hydrocarbon solvent solution of dioxins can be removed more effectively and reliability of the sample for analysis of the objective dioxins can be enhanced more.
(5) In the above respective embodiments, while the case of manually operating the respective selector valves 11, 41, 51 and the respective pumps 63, 73 is explained, the operation can be automated by computer control or the like.

Hereinafter, the present invention will be described in more detail by way of examples.

### Preparation of Solution A of Dioxins

The soil contaminated with dioxins and polychlorinated naphthalene was collected. The soil was air-dried and then sieved to obtain a soil sample having a particle size of 2 mm or less in diameter. From 10 g of the soil sample, dioxins were extracted by Soxhlet extraction using toluene in accordance with the extraction method described in "Manual on Soil Investigation and Measurement Concerning Dioxins (2000)" edited by Soil and Agricultural Chemical Division, Water Quality Bureau, the Environment Agency of Japan (aforementioned Document 1). Then, the resulting extract solution was concentrated and toluene as the solvent was replaced by n-hexane to obtain an n-hexane solution of dioxins. The n-hexane solution was further concentrated and then n-hexane was added to obtain 4 ml of a sample solution (solution A of dioxins).

### Reference Example 1

A sample for analysis of dioxins was prepared from the solution A of dioxins. Herein, the solution A of dioxins was supplied in a multilayer silica gel column packed with a silver nitrate silica gel, a sulfuric acid silica gel and a silica gel in a multi-layered state, and the solution A of dioxins was subjected to a purification treatment by allowing n-hexane to flow through the multilayer silica gel column. Then, the n-hexane solution of dioxins obtained by the purification treatment was concentrated to obtain a sample for analysis of dioxins.

The resulting sample for analysis was analyzed using a high-resolution GC/MS (resolving power = 10,000 or more). As a result, it was found that the proportion of dioxins was 56.5% and the proportion of polychlorinated naphthalene was 43.5% based on the total amount of dioxins and polychlorinated naphthalene. The percentage "%" as used herein is in terms of a peak area ratio.

### Reference Example 2

An apparatus for preparation of a sample for analysis of dioxins according to Embodiment 1 was produced and a sample for analysis of dioxins was prepared. In the apparatus for preparation and the method for preparing a sample for analysis, miscellaneous conditions were set as follows.

### <Purification Column>

### (Preceding Column)

Size of column: 13 mm in inner diameter, 20 mm in length
Supporting material: Silica gel

### (Subsequent Column)

Size of column: 13 mm in inner diameter, 200 mm in length
Silica gel-based filler: Multilayer silica gel packed with an active silica gel (40 mm in height), a silver nitrate silica gel (40 mm in height), an active silica gel (2 mm in height), a sulfuric acid silica gel (80 mm in height) and an active silica gel (30 mm in height) in this order from the upper layer side in the form a multi-layered state
Heating Temperature of Purification Column and First Solvent Tank: 60°C

### (Sample-Preparation Column)

Size of column: 7 mm in inner diameter, 50 mm in length
Alumina of Alumina Layer: Trade name "ICN Alumina B-Super I for Dioxin Analysis" of ICN Biomedicals, Inc.
Packing Type of Alumina in Alumina Layer: Packing amount = 2,000 mg, Packing height = 40 mm, Density = 0.0010 g/mm³
Carbon Material of Carbon Material Layer: Trade name "Kuraraycoal PK-DN" (Specific surface area = 1,380 m²/g, Pore size = 12 to 16 angstroms, Particle size = 45 µm in diameter) of Kuraray Co., Ltd.
Packing Type of Carbon Material in Carbon Material Layer: Packing amount = 120 mg, Packing height = 10 mm, Density = 0.00031 g/mm³
Heating Temperature of Sample-Preparation Column and Second Solvent Tank: 60°C
(Supply of Solvent from First Solvent Tank to Purification Column)
Solvent: n-hexane
Supply Rate of Solvent: 2.5 ml/min
Total Amount of Solvent: 160 ml

### (Supply of Solvent from Second Solvent Tank to Sample-Preparation Column)

Solvent (Extracting Solvent): n-hexane containing 2% by volume of toluene
Supply Rate of Solvent: 2.5 ml/min

In the preparation of a sample for analysis, 1 ml of a solution A of dioxins was supplied to a preceding column of a purification column through a supply passage. Also, a solution of an extracting solvent to be discharged through a sample-discharge passage was collected while fractionating every 20 ml using a fraction collector.

First two fractions (40 ml in total) collected using the fraction collector was concentrated to 30 µl to prepare a sample for analysis and the resulting sample for analysis was analyzed using a high-resolution GC/MS having the same resolving power as in Reference Example 1 (resolving power = 10,000 or more). As a result, it was found that in this sample for analysis, the proportion of dioxins was 88.7% and the proportion of polychlorinated naphthalene was 11.3% based on the total amount of dioxins and polychlorinated naphthalene. The percentage "%" as used herein is in terms of a peak area ratio. As is apparent from the results, the proportion of polychlorinated naphthalene in the sample for analysis of this reference example drastically decreased as compared with the sample for analysis of Reference Example 1. Also, when compared with the sample for analysis of Reference Example 1, the sample for analysis prepared in this reference example contained nearly entire amounts of PCDDs, TCDDs and Co-PCBs. The results revealed that, in the case of the sample for analysis prepared by this reference example, polychlorinated naphthalene is effectively removed and dioxins can also be accurately analyzed even by a low-resolution GC/MS having a low resolving power of about 1,000.

### Preparation of Solution B of Dioxins

Using a standard substance containing PCDDs and PCDFs (trade name "DF-ST-B" of Wellington Co.), a standard substance of Co-PCBs (trade name "PCB-ST-A" of Wellington Co.), an internal standard substance for PCDDs and PCDFs (trade name "DF-LCS-A" of Wellington Co.) and an internal standard substance for Co-PCBs (trade name "PCB-LCS-A" of Wellington Co.), a sample solution of dioxins was prepared. DF-ST-B contains seventeen kinds of PCDDs and PCDFs isomers, substituted with chlorine at the 2-, 3-, 7- and 8-positions, in which the concentration of 4 to 5 chlorinated PCDDs and PCDFs is 1.0 µg/ml, the concentration of 6 to 7 chlorinated PCDDs and PCDFs is 2.0 µg/ml, and the concentration of 8 chlorinated PCDDs and PCDFs is 5.0 µg/ml. In contrast, PCB-ST-A contains Co-PCBs in the concentration of 2.0 µg/ml.

Herein, each standard substance and each internal standard substance were mixed and then diluted by 100 times with decane to obtain a sample solution (solution B of dioxins).

### Comparative Example 1

In accordance with the method described in Japan Industrial Standards JIS K 0311: 2005 revised on June 20, 2005 "Method for Measurement of Dioxins in Exhaust Gas" (aforementioned Document 4), a solution B of dioxins was purified and then analyzed by a GC/MS method.

Herein, first, the solution B of dioxins was purified using a multilayer silica gel column and an alumina column. Specifically, 50 µl of the solution B of dioxins was added to the multilayer silica gel column and 120 ml of n-hexane was supplied at a rate of 2.5 ml/min, and then an eluate was recovered. Then, the eluate was concentrated to 3 ml and the entire amount of the concentrated eluate was added to the alumina column. After 30 ml of n-hexane was supplied to the alumina column at a rate of 2.5 ml/min, 120 ml of an n-hexane solution containing 5% by volume of dichloromethane was continuously added at a rate of 2.5 ml/min and an eluate X containing Co-PCBs was recovered. Furthermore, 150 ml of an n-hexane solution containing 50% by volume of dichloromethane was supplied at a rate of 2.5 ml/min to the alumina column and an eluate Y containing PCDDs and PCDFs was recovered. The eluate X and the eluate Y were respectively concentrated to about 1 ml and further concentrated to 20 µl after substituting the solvent with decane.

The multilayer silica gel column used in the above purification step is a column in which 0.9 g of an active silica gel, 3 g of a 2% (mass fraction) potassium hydroxide silica gel, 0.9 g of an active silica gel, 4.5 g of a 44% (mass fraction) sulfuric acid silica gel, 6 g of a 22% (mass fraction) sulfuric acid silica gel, 0.9 g of an active silica gel and 3 g of a 10% (mass fraction) nitric acid silica gel are layered in this order from the bottom in a column having an inner diameter of 15 mm and a length of 300 mm. In contrast, the alumina column is a column in which a column having an inner diameter of 10 mm and a length of 300 mm is packed with 10 g of alumina activated by heating at 500°C for 8 hours.

In the GC/MS method, samples derived from each eluate were analyzed using a high-resolution GC/MS at a resolving power of 10,000 or more. Then, a recovery ratio of each internal standard substance was calculated. The results are shown in Table 1-1 and Table 1-2.

### Example 1

An apparatus for preparation of a sample for analysis of dioxins according to the above Embodiment 1 was produced and a sample for analysis of dioxins was prepared from a solution B of dioxins. In the apparatus for preparation and the method for preparing a sample for analysis, miscellaneous conditions were set as follows.

### <Purification Column>

### (Preceding Column)

Size of column: 13 mm in inner diameter, 20 mm in length
Supporting material: Silica gel

### (Subsequent Column)

Size of column: 13 mm in inner diameter, 200 mm in length

Silica gel-based filler: Multilayer silica gel packed with 1.0 g of an active silica gel (40 mm in height), 2.5 g of a silver nitrate silica gel (40 mm in height), 0.1 g of an active silica gel (2 mm in height), 7 g of a sulfuric acid silica gel (80 mm in height) and 1.5 g of an active silica gel (30 mm in height) in this order from the upper layer side in the form a multi-layered state
Heating Temperature of Purification Column and First Solvent Tank: 60°C

### (Sample-Preparation Column)

Size of column: 6 mm in inner diameter, 30 mm in length
Alumina of Alumina Layer: Trade name "ICN Alumina B-Super I for Dioxin Analysis" of ICN Biomedicals, Inc.
Packing Type of Alumina in Alumina Layer: Packing amount = 550 mg, Packing height = 20 mm, Density = 0.0010 g/mm³
Carbon Material of Carbon Material Layer: Trade name "Kuraraycoal GW-h" (Specific surface area = 1,300 to 1,450 m²/g, Pore size = 7 to 20 angstroms, Particle size = 234 µm in diameter) of Kuraray Co., Ltd.
Packing Type of Carbon Material in Carbon Material Layer: Packing amount = 60 mg, Packing height = 5 mm, Density = 0.00042 g/mm³
Heating Temperature of Sample-Preparation Column and Second Solvent Tank: 80°C

### (Supply of Solvent from First Solvent Tank to Purification Column)

Solvent: n-hexane
Supply Rate of Solvent: 2.5 ml/min
Total Amount of Solvent: 85 ml
(Supply of Solvent from Second Solvent Tank to Sample-Preparation Column)
Solvent (Extracting Solvent): Toluene
Supply Rate of Solvent: 2.5 ml/min

In the preparation of a sample for analysis, 50 µl of a solution B of dioxins was supplied to a preceding column of a purification column through a supply passage. As a solution of an extracting solvent to be discharged through a sample-discharge passage, 1.5 ml of an initial flow was collected.

In the collected solution of the extracting solvent, the solvent was replaced from toluene by decane and the solution was concentrated to 20 µl to obtain a sample for analysis. The resulting sample for analysis was analyzed by a GC/MS method under the same conditions as in Comparative Example 1. Then, a recovery ratio of each internal standard substance was calculated. The results are shown in Table 1-1 and Table 1-2. In Comparative Example 1 and Example 1, the recovery ratio was within a range from 87 to 110% and was within a range from 50 to 120% specified in Japan Industrial Standards JIS K 0311: 2005 revised on June 20, 2005 "Method for Measurement of Dioxins in Exhaust Gas".

**Table 1-1**

| Dioxins | | Recovery ratio (%) | |
|---|---|---|---|
| | | Comparative Example 1 | Example 1 |
| PCDDs | ¹³C₁₂-2,3,7,8-TeCDD | 94 | 107 |
| | ¹³C₁₂-1,2,3,7,8-PeCDD | 98 | 97 |
| | ¹³C₁₂-1,2,3,4,7,8-HxCDD | 94 | 100 |
| | ¹³C₁₂-1,2,3,6,7,8-HxCDD | 91 | 96 |
| | ¹³C₁₂-1,2,3,7,8,9-HxCDD | 93 | 103 |
| | ¹³C₁₂-1,2,3,4,6,7,8-HpCDD | 102 | 100 |
| | ¹³C₁₂-1,2,3,4,6,7,8,9-OCDD | 96 | 91 |
| PCDFs | ¹³C₁₂-2,3,7,8-TeCDF | 96 | 104 |
| | ¹³C₁₂-1,2,3,7,8-PeCDF | 94 | 98 |
| | ¹³C₁₂-2,3,4,7,8-PeCDF | 98 | 101 |
| | ¹³C₁₂-1,2,3,4,7,8-HxCDF | 95 | 87 |
| | ¹³C₁₂-1,2,3,6,7,8-HxCDF | 95 | 93 |
| | ¹³C₁₂-1,2,3,7,8,9-HxCDF | 97 | 97 |
| | ¹³C₁₂-2,3,4,6,7,8-HxCDF | 100 | 96 |
| | ¹³C₁₂-1,2,3,4,6,7,8-HpCDF | 94 | 93 |
| | ¹³C₁₂-1,2,3,4,7,8,9-HpCDF | 93 | 98 |
| | ¹³C₁₂-1,2,3,4,6,7,8,9-OCDF | 98 | 96 |

**Table 1-2**

| Dioxins (*) | | Recovery ratio (%) | |
|---|---|---|---|
| | | Comparative Example 1 | Example 1 |
| Co-PCBs | ¹³C₁₂-3,4,4',5-TeCB (#81) | 92 | 91 |
| | ¹³C₁₂-3,3',4,4'-TeCB (#77) | 102 | 97 |
| | ¹³C₁₂-3,3',4,4',5-PeCB (#126) | 99 | 101 |
| | ¹³C₁₂-3,3',4,4',5,5'-HxCB (#169) | 110 | 99 |
| | ¹³C₁₂-2',3,4,4',5-PeCB (#123) | 102 | 99 |
| | ¹³C₁₂-2,3',4,4',5-PeCB (#118) | 99 | 94 |
| | ¹³C₁₂-2,3,3',4,4'-PeCB (#105) | 108 | 101 |
| | ¹³C₁₂-2,3,4,4',5-PeCB (#114) | 93 | 97 |
| | ¹³C₁₂-2,3',4,4',5,5'-HxCB (#167) | 108 | 97 |
| | ¹³C₁₂-2,3,3',4,4',5-HxCB (#156) | 91 | 88 |
| | ¹³C₁₂-2,3,3',4,4',5'-HxCB (#157) | 107 | 95 |
| | ¹³C₁₂-2,3,3',4,4',5,5'-HpCB (#189) | 102 | 91 |

| | | | |
|---|---|---|---|
| *: Symbols within the parentheses indicate IUPAC Nos. | | | |

### Preparation of Solution C of Dioxins

The soil in an old factory site contaminated with dioxins was collected from the ground surface to a depth not deeper than 5 cm. The soil was air-dried and then sieved to obtain a soil sample having a particle size of 2 mm or less in diameter.

From 10 g of the soil sample, dioxins were extracted by Soxhlet extraction using toluene in accordance with the extraction method described in "Manual on Soil Investigation and Measurement Concerning Dioxins (2000)" edited by Soil and Agricultural Chemical Division, Water Quality Bureau, the Environment Agency of Japan. Then, the resulting extract solution was concentrated and toluene as the solvent was replaced by n-hexane. The extract solution in which the solvent was replaced was further concentrated to obtain 10 ml of a sample solution (solution C of dioxins).

### Comparative Example 2

In accordance with the method described in "Manual on Soil Investigation and Measurement Concerning Dioxins (2000)" edited by Soil and Agricultural Chemical Division, Water Quality Bureau, the Environment Agency of Japan, a solution C of dioxins was purified and then analyzed by a GC/MS method.

Herein, first, 5 ml out of 10 ml of the solution C of dioxins was separated and two kinds of the same internal standard substances (diluted with decane) as those used in "Preparation of Solution B of Dioxins" were added. Using the same multilayer silica gel column and the alumina column as those used in Comparative Example 1, the solution C of dioxins was purified. The purification method is the same as in Comparative Example 1, except that the amount of the solution C of dioxins to be added to the multilayer silica gel column was changed to 5 ml.

In the GC/MS method, samples derived from each eluate were analyzed using a high-resolution GC/MS having a resolving power of 10,000 or more. With respect to the sample derived from the eluate X, an actually measured concentration (pg/g) of each isomer of Co-PCBs was calculated. With respect to the sample derived from the eluate Y, an actually measured concentration (pg/g) of each isomer of PCDDs and PCDFs, substituted with chlorine at the 2-, 3-, 7-and 8-positions, was calculated. Also, a recovery ratio of each internal standard substance was calculated. The results are shown in Table 2-1 and Table 2-2.

### Example 2

Using the apparatus for preparation of a sample for analysis of dioxins produced in Example 1, a sample for analysis of dioxins was prepared from the solution C of dioxins. In the apparatus for preparation and the method for preparing a sample for analysis, miscellaneous conditions are the same as in Example 1.

In the preparation of a sample for analysis, 5 ml of the solution C of dioxins was separated and two kinds of the same internal standard substances (diluted with decane) as those used in "Preparation of Solution B of Dioxins" were added. Then, the solution C of dioxins was supplied to a preceding column of a purification column through a supply passage. As a solution of an extracting solvent to be discharged through a sample-discharge passage, 1.5 ml of an initial flow was collected.

In the collected solution of the extracting solvent, toluene as the solvent was replaced by decane and the solution was concentrated to 20 µl to obtain a sample for analysis. The resulting sample for analysis was analyzed by a GC/MS method under the same conditions as in Comparative Example 1. An actually measured concentration (pg/g) of each isomer of Co-PCBs and an actually measured concentration (pg/g) of each isomer of PCDDs and PCDFs, substituted with chlorine at the 2-, 3-, 7- and 8-positions, were calculated. Also, a recovery ratio of each internal standard substance was calculated. The results are shown in Table 2-1 to Table 2-4.

**Table 2-1**

| Dioxins | | Actually measured concentration (pg/g) | |
|---|---|---|---|
| | | Comparative Example 2 | Example 2 |
| PCDDs | 2,3,7,8-TeCDD | 15.932 | 17.129 |
| | 1,2,3,7,8-PeCDD | 122.788 | 133.469 |
| | 1,2,3,4,7,8-HxCDD | 160.159 | 164.08 |
| | 1,2,3,6,7,8-HxCDD | 312.266 | 295.211 |
| | 1,2,3,7,8,9-HxCDD | 220.187 | 220.547 |
| | 1,2,3,4,6,7,8-HpCDD | 1763.531 | 1677.882 |
| | 1,2,3,4,6,7,8,9-OCDD | 3147.904 | 2974.838 |
| PCDFs | 2,3,7,8-TeCDF | 89.33 | 80.941 |
| | 1,2,3,7,8-PeCDF | 263.215 | 283.019 |
| | 2,3,4,7,8-PeCDF | 295.036 | 310.488 |
| | 1,2,3,4,7,8-HxCDF | 433.656 | 459.11 |
| | 1,2,3,6,7,8-HxCDF | 400.713 | 428.986 |
| | 1,2,3,7,8,9-HxCDF | 34.257 | 28.397 |
| | 2,3,4,6,7,8-HxCDF | 452.855 | 476.878 |
| | 1,2,3,4,6,7,8-HpCDF | 1495.535 | 1590.958 |
| | 1,2,3,4,7,8,9-HpCDF | 171.578 | 163.201 |
| | 1,2,3,4,6,7,8,9-OCDF | 668.759 | 636.842 |

**Table 2-2**

| Dioxins (*) | | Actually measured concentration (pg/g) | |
|---|---|---|---|
| | | Comparative Example 2 | Example 2 |
| Co-PCBs | 3,4,4',5-TeCB (#81) | 24.739 | 21.628 |
| | 3,3',4,4'-TeCB (#77) | 89.551 | 92.079 |
| | 3,3',4,4',5-PeCB (#126) | 127.882 | 118.463 |
| | 3,3',4,4',5,5'-HxCB (#169) | 50.8 | 52.516 |
| | 2',3,4,4',5-PeCB (#123) | 7.568 | 7.159 |
| | 2,3',4,4',5-PeCB (#118) | 93.253 | 89.643 |
| | 2,3,3',4,4'-PeCB (#105) | 79.188 | 66.087 |
| | 2,3,4,4',5-PeCB (#114) | 10.185 | 9.501 |
| | 2,3',4,4',5,5'-HxCB (#167) | 23.623 | 22.194 |
| | 2,3,3',4,4',5-HxCB (#156) | 89.622 | 92.487 |
| | 2,3,3',4,4',5'-HxCB (#157) | 30.713 | 31.071 |
| | 2,3,3',4,4',5,5'-HpCB (#189) | 62.485 | 60.621 |

| | | | |
|---|---|---|---|
| *: Symbols within the parentheses indicate IUPAC Nos. | | | |

**Table 2-3**

| Dioxins | | Recovery ratio (%) | |
|---|---|---|---|
| | | Comparative Example 2 | Example 2 |
| PCDDs | ¹³C₁₂-2,3,7,8-TeCDD | 80 | 88 |
| | ¹³C₁₂-1,2,3,7,8-PeCDD | 97 | 111 |
| | ¹³C₁₂-1,2,3,4,7,8-HxCDD | 91 | 107 |
| | ¹³C₁₂-1,2,3,6,7,8-HxCDD | 95 | 111 |
| | ¹³C₁₂-1,2,3,7,8,9-HxCDD | 96 | 107 |
| | ¹³C₁₂-1,2,3,4,6,7,8-HpCDD | 102 | 105 |
| | ¹³C₁₂-1,2,3,4,6,7,8,9-OCDD | 95 | 82 |
| PCDFs | ¹³C₁₂-2,3,7,8-TeCDF | 88 | 102 |
| | ¹³C₁₂-1,2,3,7,8-PeCDF | 84 | 86 |
| | ¹³C₁₂-2,3,4,7,8-PeCDF | 85 | 92 |
| | ¹³C₁₂-1,2,3,4,7,8-HxCDF | 97 | 109 |
| | ¹³C₁₂-1,2,3,6,7,8-HxCDF | 97 | 106 |
| | ¹³C₁₂-1,2,3,7,8,9-HxCDF | 104 | 105 |
| | ¹³C₁₂-2,3,4,6,7,8-HxCDF | 96 | 109 |
| | ¹³C₁₂-1,2,3,4,6,7,8-HpCDF | 94 | 99 |
| | ¹³C₁₂-1,2,3,4,7,8,9-HpCDF | 95 | 95 |
| | ¹³C₁₂-1,2,3,4,6,7,8,9-OCDF | 95 | 87 |

**Table 2-4**

| Dioxins (*) | | Recovery ratio (%) | |
|---|---|---|---|
| | | Comparative Example 2 | Example 2 |
| Co-PCBs | ¹³C₁₂-3,4,4',5-TeCB (#81) | 94 | 101 |
| | ¹³C₁₂-3,3',4,4'-TeCB (#77) | 97 | 100 |
| | ¹³C₁₂-3,3',4,4',5-PeCB (#126) | 93 | 113 |
| | ¹³C₁₂-3,3',4,4',5,5'-HxCB (#169) | 88 | 108 |
| | ¹³C₁₂-2',3,4,4',5-PeCB (#123) | 95 | 88 |
| | ¹³C₁₂-2,3',4,4',5-PeCB (#118) | 110 | 91 |
| | ¹³C₁₂-2,3,3',4,4'-PeCB (#105) | 108 | 99 |
| | ¹³C₁₂-2,3,4,4',5-PeCB (#114) | 105 | 86 |
| | ¹³C₁₂-2,3',4,4',5,5'-HxCB (#167) | 89 | 85 |
| | ¹³C₁₂-2,3,3',4,4',5-HxCB (#156) | 87 | 87 |
| | ¹³C₁₂-2,3,3',4,4',5'-HxCB (#157) | 93 | 88 |
| | ¹³C₁₂-2,3,3',4,4',5,5'-HpCB (#189) | 85 | 83 |

| | | | |
|---|---|---|---|
| *: Symbols within the parentheses indicate IUPAC Nos. | | | |

In Comparative Example 2 and Example 2, the recovery ratio was within a range from 80 to 113% and was within a range from 50 to 120% specified in "Manual on Soil Investigation and Measurement Concerning Dioxins (2000)" edited by Soil and Agricultural Chemical Division, Water Quality Bureau, the Environment Agency of Japan. Also, the actually measured concentration of all isomers nearly agreed in Comparative Example 1 and Example 2.

### Preparation of Solution D of Dioxins

In accordance with a method using a filter defined in Japan Industrial Standards JIS K 0311: 2005 revised on June 20, 2005 "Method for Measurement of Dioxins in Exhaust Gas", dioxins contained in an exhaust gas (corresponding to 1.0180 m³N) discharged from an incineration facility were collected and the thus collected dioxins were extracted with toluene using the extraction method defined in the same Japan Industrial Standards. The extract solution was concentrated to 20 ml after replacing toluene as the solvent by n-hexane to obtain a sample solution (solution D of dioxins).

### Comparative Example 3

In accordance with the method described in Japan Industrial Standards JIS K 0311: 2005 revised on June 20, 2005 "Method for Measurement of Dioxins in Exhaust Gas", 6 ml of a solution D of dioxins was purified and then analyzed by using a high-resolution GC/MS. The total toxicity equivalency (total TEQ value) of the solution D of dioxins was determined based on the analytical results. The total TEQ value was 15 ng-TEQ/m³N.

### Example 3

Using the apparatus for preparation of a sample for analysis of dioxins produced in Example 1, a sample for analysis of dioxins was prepared from the solution D of dioxins. Miscellaneous conditions in the preparation of a sample for analysis are the same as in Example 1, except for the following points.
Solvent (extracting solvent) to be supplied to Sample-Preparation Column from Second Solvent Tank: Dimethyl sulfoxide
Heating Temperature of Sample-Preparation Column and Second Solvent Tank: 60°C

In the preparation of a sample for analysis, 6 ml of a solution D of dioxins was supplied to a preceding column of a purification column through a supply passage. As a solution of an extracting solvent (dimethyl sulfoxide solution) to be discharged through a sample-discharge passage, 0.898 ml of an initial flow was collected.

The collected solution of the extracting solvent was diluted by 50 times using dimethyl sulfoxide and the concentration of dioxins in the diluted solution was measured by a bioassay method. The concentration of dioxins was 5,750 ng-TCP/ml. Herein, the measurement was carried out in accordance with "Manual on Bioassay Concerning Dioxins (Exhaust Gas, Dust and Burnt Residue)" (September 14, 2005 by Dioxins Control Office, General Administration Division, Environmental Management Bureau, the Ministry of the Environment of Japan) using "DioQuicker" (trade name) manufactured by Kankyo Sol-Tech Co., Ltd. conforming to the Ministry of the Environment of Japan, Notice No. 92-2/2005 which defines a bioassay method in which an antigen-antibody reaction using dioxins as an antigen is utilized.

The measurement result thus obtained was converted into a TEQ value in accordance with the method defined in the aforementioned Manual on Bioassay. The TEQ value thus obtained was 15 ng-TEQ/m³N and agreed with that of Comparative Example 3.

The invention may be embodied in other various forms without departing from the spirit or essential properties thereof. The above embodiments or examples are therefore to be considered in all respects as illustrative and not restrictive. The scope of the invention is indicated by the claims and not restricted by no means by the foregoing description. Furthermore, all changes and modifications which come within the range of equivalency of the claims are therefore intended to be embraced in the present invention.

## Claims

1. A method for preparing a sample for analysis of dioxins from an aliphatic hydrocarbon solvent solution of dioxins, which comprises the steps of:
supplying the aliphatic hydrocarbon solvent solution to an alumina layer,
supplying an aliphatic hydrocarbon solvent to the alumina layer, to which the aliphatic hydrocarbon solvent solution has been supplied, thereby passing the aliphatic hydrocarbon solvent through the alumina layer,
supplying the aliphatic hydrocarbon solvent passed through the alumina layer to a carbon material layer, thereby passing the aliphatic hydrocarbon solvent through the carbon material layer, and
supplying one extracting solvent selected from the group consisting of toluene, a mixed solvent of toluene and an aliphatic hydrocarbon solvent, and a hydrophilic solvent capable of dissolving the dioxins to the carbon material layer and the alumina layer after passing the aliphatic hydrocarbon solvent through the carbon material layer, in the direction opposed to the passing direction of the aliphatic hydrocarbon solvent, thereby securing a solution of the extracting solvent passed through the carbon material layer and the alumina layer in this order.

2. The method for preparing a sample for analysis of dioxins according to claim 1, wherein the carbon material layer is made of a carbon material having a specific surface area of 10 to 2,000 m²/g and a pore size of 7 to 500 angstroms.

3. The method for preparing a sample for analysis of dioxins according to claim 2, wherein the carbon material has a particle size of 10 to 500 µm in diameter.

4. The method for preparing a sample for analysis of dioxins according to claim 3, wherein toluene is used as the extracting solvent, and the alumina layer and the carbon material layer are respectively heated to a temperature within a range from 60 to 90°C.

5. The method for preparing a sample for analysis of dioxins according to claim 3, wherein the hydrophilic solvent is used as the extracting solvent, and the alumina layer and the carbon material layer are respectively heated to a temperature within a range from 50 to 70°C.

6. The method for preparing a sample for analysis of dioxins according to claim 3, wherein the mixed solvent is used as the extracting solvent, and the alumina layer and the carbon material layer are respectively heated to a temperature within a range from 50 to 62°C.

7. The method for preparing a sample for analysis of dioxins according to claim 1, wherein the alumina layer is placed on the carbon material layer.

8. The method for preparing a sample for analysis of dioxins according to claim 1, wherein supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.

9. An apparatus for preparing a sample for analysis of dioxins from an aliphatic hydrocarbon solvent solution of dioxins, comprising:
a first column packed with a silica gel layer,
a second column packed with an alumina layer and a carbon material layer in a layered state,
a supply passage for supplying the aliphatic hydrocarbon solvent solution to the first column,
a first solvent supply section for supplying an aliphatic hydrocarbon solvent to the first column,
a column communicating passage for supplying the aliphatic hydrocarbon solvent from the first column to the second column from the alumina layer side,
a second solvent supply section for supplying one extracting solvent selected from the group consisting of toluene, a mixed solvent of toluene and an aliphatic hydrocarbon solvent, and a hydrophilic solvent capable of dissolving the dioxins to the second column from the carbon material layer side, and
a discharge passage for discharging the extracting solvent passed through the second column.

10. The apparatus for preparing a sample for analysis of dioxins according to claim 9, wherein the second column stands vertically so as to constitute the lower layer with the carbon material layer, and is also disposed below the first column.

11. A column for preparing a sample for analysis of dioxins, comprising:
a cylindrical container having an opening portion at both ends;
a carbon material layer packed in the container; and
an alumina layer packed adjacent to the carbon material layer in the container.

12. The column for preparing a sample for analysis of dioxins according to claim 11, wherein the carbon material layer is made of a carbon material having a specific surface area of 10 to 2,000 m²/g and a pore size of 7 to 500 angstroms.

13. The column for preparing a sample for analysis of dioxins according to claim 12, wherein the carbon material has a particle size of 10 to 500 µm in diameter.

14. A method for analyzing dioxins, which comprises the steps of:
supplying an aliphatic hydrocarbon solvent solution of dioxins to an alumina layer,
supplying an aliphatic hydrocarbon solvent to the alumina layer, to which the aliphatic hydrocarbon solvent solution has been supplied, thereby passing the aliphatic hydrocarbon solvent through the alumina layer,
supplying the aliphatic hydrocarbon solvent passed through the alumina layer to a carbon material layer, thereby passing the aliphatic hydrocarbon solvent through the carbon material layer,
supplying one extracting solvent selected from the group consisting of toluene and a mixed solvent of toluene and an aliphatic hydrocarbon solvent to the carbon material layer and the alumina layer after passing the aliphatic hydrocarbon solvent through the carbon material layer, in the direction opposed to the passing direction of the aliphatic hydrocarbon solvent, and
injecting a solution of the extracting solvent obtained by passing through the carbon material layer and the alumina layer in this order to a gas chromatograph-mass spectrometer as it is, thereby analyzing the dioxins.

15. The method for analyzing dioxins according to claim 14, wherein supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.

16. A method for analyzing dioxins, which comprises the steps of:
supplying an aliphatic hydrocarbon solvent solution of dioxins to an alumina layer,
supplying an aliphatic hydrocarbon solvent to the alumina layer, to which the aliphatic hydrocarbon solvent solution has been supplied, thereby passing the aliphatic hydrocarbon solvent through the alumina layer,
supplying the aliphatic hydrocarbon solvent passed through the alumina layer to a carbon material layer, thereby passing the aliphatic hydrocarbon solvent through the carbon material layer,
supplying a hydrophilic solvent capable of dissolving the dioxins to the carbon material layer and the alumina layer after passing the aliphatic hydrocarbon solvent through the carbon material layer in the direction opposed to the passing direction of the aliphatic hydrocarbon solvent, thereby securing a solution of the hydrophilic solvent obtained by passing through the carbon material layer and the alumina layer in this order, and
analyzing the dioxins contained in the solution of the hydrophilic solvent using a bioassay method.

17. The method for analyzing dioxins according to claim 16, wherein supplying the aliphatic hydrocarbon solvent solution to a silica gel layer, supplying the aliphatic hydrocarbon solvent to the silica gel layer, thereby passing the aliphatic hydrocarbon solvent solution through the silica gel layer and supplying the aliphatic hydrocarbon solvent solution to the alumina layer, and supplying the aliphatic hydrocarbon solvent to the alumina layer through the silica gel layer, thereby passing the aliphatic hydrocarbon solvent through the alumina layer.
